# EUROPEAN PATENT SPECIFICATION

(11) **EP 0 857 407 B1**
(45) Date of publication and mention of the grant of the patent: **12.06.2002**
(21) Application number: 98200124.0
(22) Date of filing: 19.01.1998
(51) Int. Cl.: A01B 17/00

(54) **Device for working the ground**
Bodenbearbeitungsvorrichtung
Dispositif pour le travail du sol

(30) Priority: 17.01.1997 NL 1005034; 03.04.1997 NL 1005716
(43) Date of publication of application: 12.08.1998
(73) Proprietor: Cappon v.o.f., 4451 RP Heinkenszand (NL)
(72) Inventor: Cappon, Izaak Gilles, 4451 HK Heinkenszand (NL)
(74) Representative: Bartelds, Erik

(56) References cited:
- EP-A- 0 149 488
- EP-A- 0 222 377
- EP-A- 0 483 033
- AT-B- 374 073
- DE-A- 1 632 787
- DE-A- 3 712 540
- DE-C- 198 326
- GB-A- 922 353
- GB-A- 1 249 243
- US-A- 3 162 248
- US-A- 3 233 684

## Description

The invention relates to a device for working soil, comprising a frame which is provided with means for coupling thereof to a tractor or other agricultural machine and in which is accommodated at least one working body which is rotatable on a lying axis, the coupling means comprising at least two substantially parallel outriggers that are adjustable in their length direction, the coupling means being arranged such that during use the axis encloses an angle to the direction of movement of the tractor or agricultural machine. Such a device, which is particularly suitable for pulverizing larger pieces of mutually affixed soil, such as for instance plough cuts created after a soil working with an agricultural plough, is known from AT-B-374 073. This pulverizing is important to improve the structure of the soil after ploughing, with a view to sowing or planting new crops in the spring.

This prior art document AT-B-374 073 discloses a post-treatment device for a plough which is suitable for pulverizing plough cuts formed by the plough. This post-treatment device is formed by an auxiliary frame suspended from the plough by a number of parallel length-adjustable outriggers. The frame, which has a rotatable shaft journalled therein, running parallel to the boom of the plough. The shaft is thus placed at an acute angle to the travel direction. Pairs of elongated teeth extend perpendicularly from the shaft at regular intervals for pulverizing the ground. In a first embodiment of this prior art device the outriggers are pivotable about horizontal axes for adjusting the working depth of the rotatable shaft and teeth. In another embodiment, the shaft is arranged on carriages that are slidable in vertical direction in order to adjust the working depth of the teeth.

The invention now has for its object to provide an improved device of the above described type. In accordance with a first aspect of the invention this is achieved in that the outriggers are adapted to receive the frame such that it is slidable in its length direction to allow adjustment the position of the or each working body. By adjusting this position the working device can be made suitable in simple manner for working many diverse types of soil. The width of the device can moreover be changed by changing the position of the or each working body, which is important inter alia when the agricultural machine is revolved on its axis at the end of a field or for transport by road of the soil working device.

The device can be coupled directly to an agricultural tractor and thus used separately, but can also be employed in combination with for instance an agricultural plough coupled to a tractor, so that in a single working operation the soil can be ploughed and further pulverized.

In a preferred ambodiment of the soil working device of the invention, the coupling means comprise clamping sleeves with which the frame can be fixed in different positions.

In accordance with a second aspect of the invention the outriggers are pivotable on standing shafts and the coupling means are further provided with means for adjusting the pivot angle of the outriggers. These pivot angle adjusting means can be operated hydraulically so that the device can be adjusted with little effort.

In another preferred embodiment of the soil working device of the invention, the or each working body may be elongate and may have a periphery which extends substantially parallel to the rotation axis and on which a number of protruding working members are arranged with interspacing. The working body can thus form a roller which is provided with protrusions. At least a part of the working members advantageously encloses an angle herein with a radial from the axis of rotation and thus, in other words, does not lie perpendicularly of the working body.

The working members can comprise knives which are advantageously placed substantially parallel to the rotation axis of the or each working body. These knives can herein advantageously be arranged in a spiral-shaped line on the or each working body and are preferably detachable in order to enable their removal for servicing or replacement.

An alternative embodiment of the soil working device of the invention the device may comprise a number of working bodies in the form of mutually parallel, separately rotatable discs. By causing such discs to rotate at an angle relative to the working direction a very good pulverizing working of the soil is obtained.

When on the other hand the discs are each connected to the frame for pivoting on a standing shaft, they can follow the direction of movement of the device and serve to press down the worked soil.

Although the working body or the working bodies can in principle be set into rotation by towing thereof along the soil, the device can also have means for rotatable driving of the or each working body, for instance in the form of a hydraulic motor or a mechanical transmission connected to the power take-off of an agricultural tractor.

The invention also relates to an assembly of an agricultural machine, such as a plough, and one or more soil working devices as described above coupled thereto. With such an assembly two or more operations can be performed in one working cycle, thus achieving a great time-saving, while moreover a field does not have to be travelled over unnecessarily, this ultimately enhancing the soil structure. The soil working device is herein advantageously coupled at least partially to the side of the agricultural machine, as seen in the direction of movement, so that ploughed-up earth, so-called plough-soil, which is thrown out to one side, can be immediately pulverized.

The invention is now elucidated on the basis of two embodiments, wherein reference is made to the annexed drawing, in which:
fig. 1 shows a top view of an assembly of a plough and a soil working device according to a first embodiment of the invention behind an agricultural tractor,

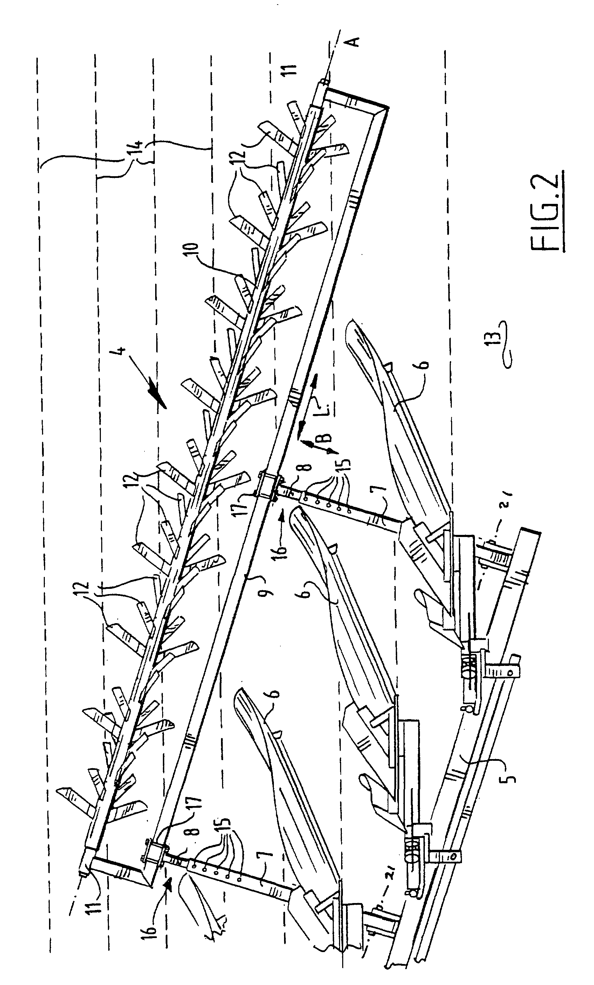

fig. 2 shows an enlarged detail of the soil working device of fig. 1,
Fig. 3 is a view corresponding with fig. 2 of a second embodiment of the soil working device,
fig. 4 is a top view of a third embodiment of the soil working device itself,
fig. 5 is a view corresponding with fig. 1 and 3 of a fourth embodiment of the soil working device, and
fig. 6, 7 and 8 are views corresponding with fig. 1, 3 and 5 and schematic side views of variants of the soil working device with pressing discs pivotable on a standing shaft.

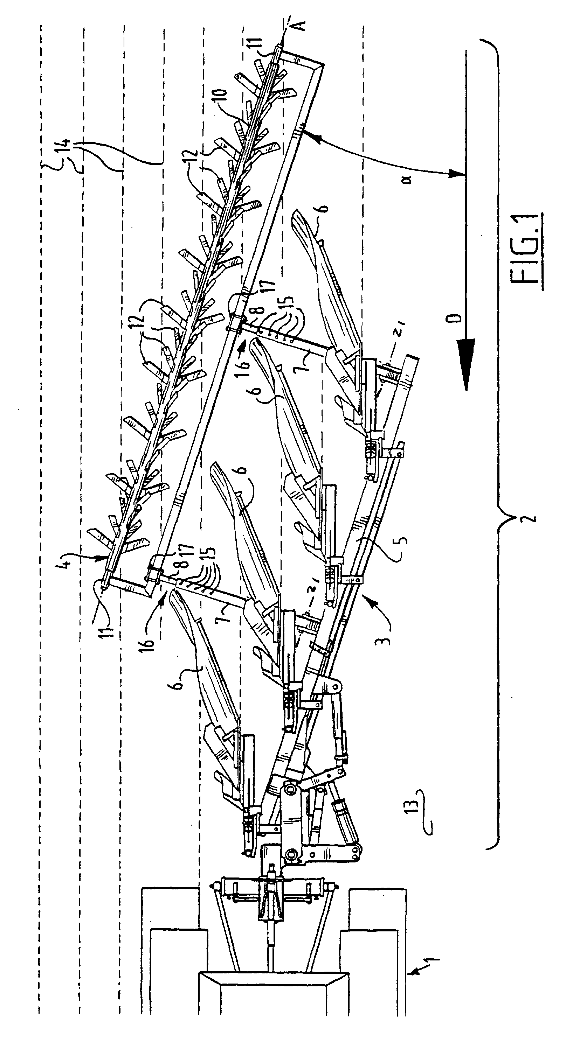

An assembly 2 according to the invention moved forward by a tractor 1 consists of an agricultural plough 3 and a soil working device 4 coupled adjacently of or at an angle behind the plough (fig. 1). Plough 3 comprises in the usual manner a frame or boom 5 to which is fixed a number of ploughshares 6 with which plough cuts 14 are formed in soil 13. Fixed to frame 5 are two outriggers 7 in which two arms 8 are received. Outriggers 7 and arms 8 received therein form the coupling means 16 of the soil working device 4. Outriggers 7 are pivotable on lying shafts 21 so that the working depth of device 4 can be adjusted. Adjustment of the working depth can take place manually as well as by mechanical or hydraulic means. Use can be made in the depth adjustment by mechanical means of an adjustable stop.

The soil working device 4 comprises a frame 9 in which in the shown embodiment, a single working body 10 is arranged which is rotatably mounted with both its ends in bearings 11. The bearings 11 herein define a lying or horizontal axis of rotation A which encloses an angle *α* with the working direction or the travel direction D of tractor 1. Arranged on working body 10 is a large number of protruding, separate working members 12 which in the shown embodiment are placed in two spiral-shaped lines round working body 10. The working members 12 do not herein extend in accordance with a radial of working body 10 but enclose an angle therewith and are therefore, in other words, arranged sloping to the rear relative to working body 10. The working members 12 are hereby self-discharging, i.e. no earth collects therein, whereby the effectiveness of device 4 would be reduced. In the shown embodiment the working members 12 herein take the form of knives placed with their cutting edge parallel to the axis of rotation A. It is of course also possible to place the knives 12 with their cutting edge at an angle relative to the axis of rotation, depending on the soil type to be worked. Knives 12 can otherwise be arranged releasably on working body 10 so that in the case of wear they can be detached in simple manner, for instance for sharpening or even for replacement.

Because, when the device 4 is moved forward over the soil 13, these knives 12 as it were dig into this soil, a rotational moment round the axis A is generated by the friction between knives 12 and soil 13, whereby working body 10 will begin to rotate on this axis. The plough cuts 14 thrown up by the shares 6 are thereby then pulverized by knives 12, whereby the soil is well loosened.

The coupling means 16 connecting frame 9 to plough 3 are adapted to adjust the position of working body 10. In the shown embodiment the coupling means comprise for this purpose a pin-hole system 15 with which the arms 8 of frame 9, which are received slidably according to arrow B in the outriggers 7 connected to the plough frame 5, can be fixed in different slide-out lengths. In addition, the coupling means 16 comprise a pair of clamping sleeves 17 with which the frame 9, which is slidable in the direction of arrow L, can be fixed in different positions.

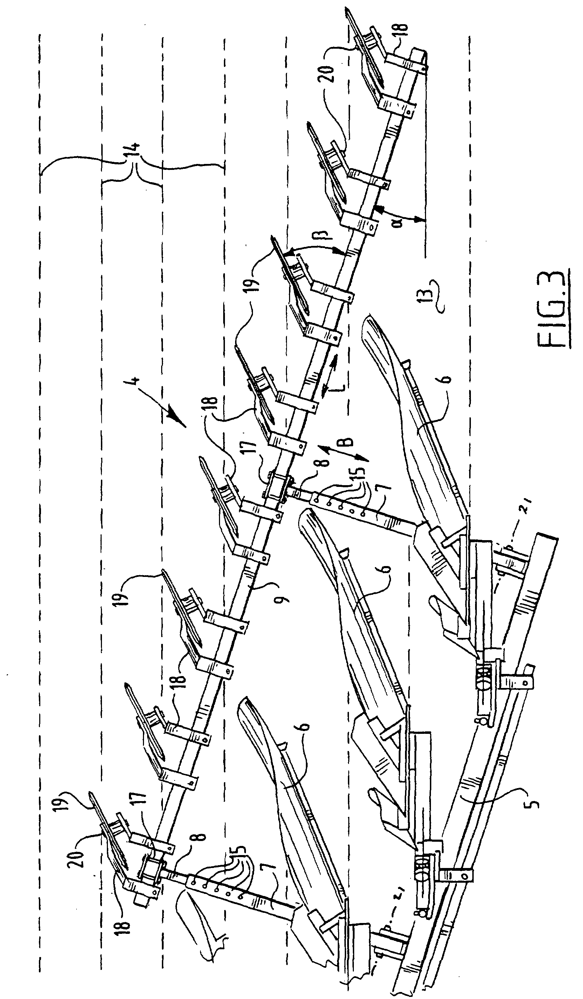

According to a second embodiment (fig. 3), the soil working device 4 is provided with a number of mutually parallel working bodies in the form of discs 19 which are each rotatable on a rotation axis 20. In this embodiment the discs 19 are herein each accommodated in a forked outrigger 18 which is fixed at an angle β to frame 9. A singly embodied outrigger can of course also be used. The angle at which discs 19 are pulled through the soil 13 is thus equal to the angle difference β-α. By varying the angle β the action of the discs 19 can be adapted to the soil type being worked by device 4.

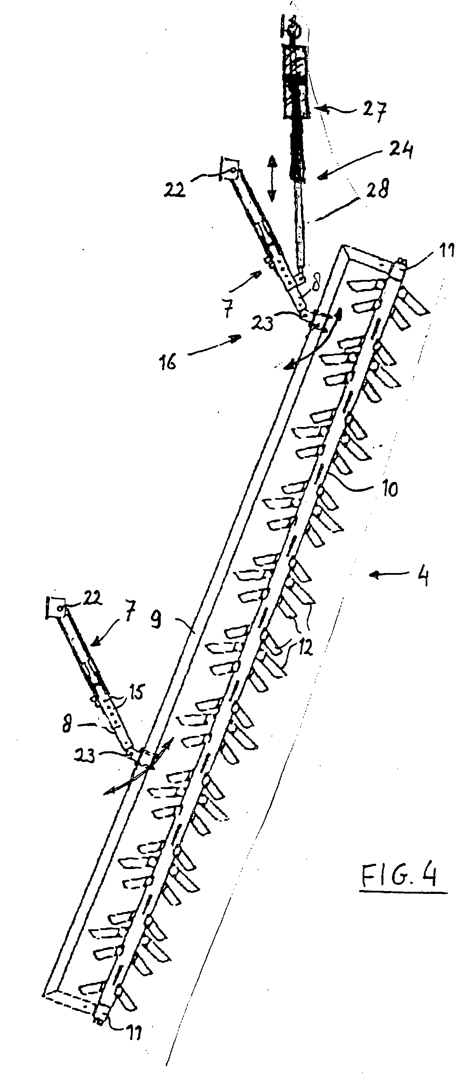

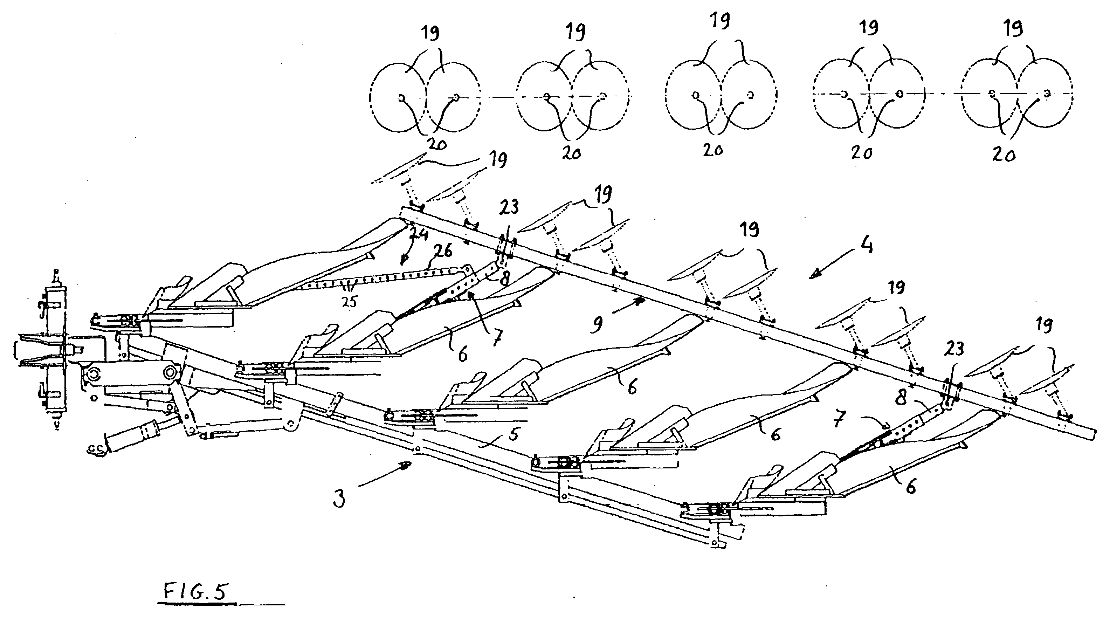

While in the foregoing embodiments the frame 9 was connected in each case for sliding in lengthwise direction 11 to outriggers 7, it is also possible to connect outriggers 7 to both the plough frame 5 and the frame 9 of device 4 for pivoting on standing shafts 22, 23, and in addition to arrange means 24 for adjusting the pivot angle of outriggers 7. These pivot angle adjusting means 24 can take the form of a single beam 25 with openings 26 which co-act with a pin (not shown here) which is connected to frame 5 of plough 3 (fig. 5), but can also be formed by a hydraulic cylinder 27 which is connected to plough frame 5 and of which the piston rod 28 is connected to one of the outriggers 7 (fig. 4). By adjusting the pivot angle of outriggers 7 the frame 9 can be displaced forward or rearward in the travel direction relative to the plough frame 5, wherein the distance transversely of the working direction between plough frame 5 and frame 9 also increases or decreases. Thus can be ensured that working body 10 follows the plough cuts in all conditions. The working device 4 can in this manner also be folded toward the plough frame 5 when for instance the plough has to be turned on its longitudinal axis at the end of a field or when the plough with the working device 4 has to be transported by road.

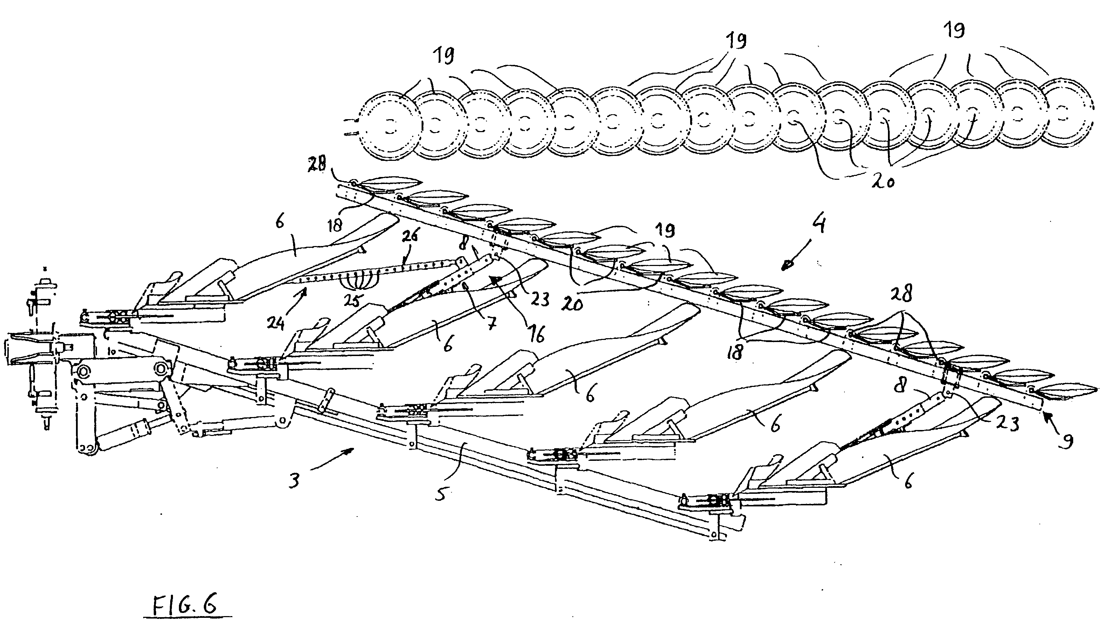

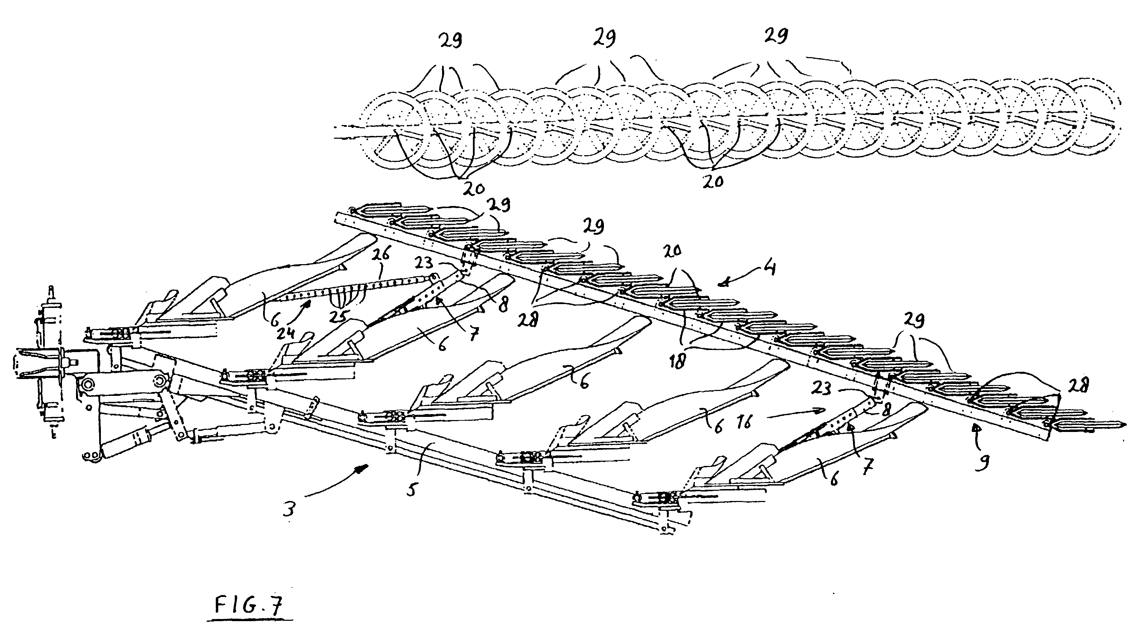

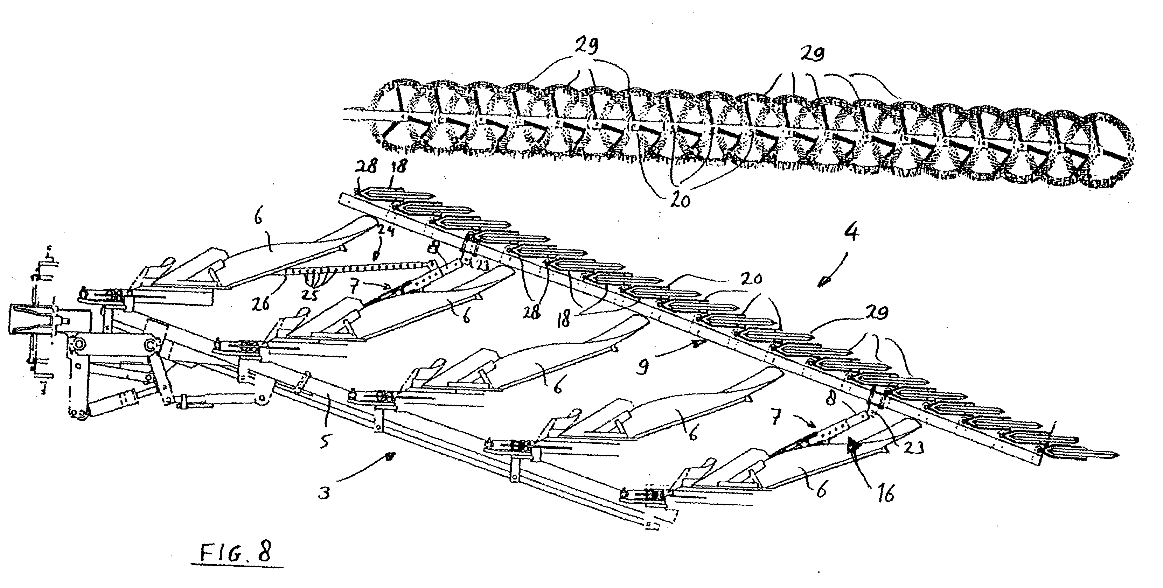

Although the device 4 is described above with reference to embodiments with which the soil can be pulverized, it is also possible to use the device 4 to press down the worked soil. To this end the working bodies can be embodied as mutually parallel, separately rotatable discs 19 which, in contrast to the embodiments of fig. 3 and 5, are then not fixed rigidly to frame 9 but are pivotable relative thereto round a standing shaft 28. Making the discs 19 freely pivotable relative to frame 9 ensures that they will align themselves in the direction of forward movement of plough 3 and device 4 over the ground, whereby they will not so much reduce the soil as press it down. The specific form of the discs 19 can vary therein depending on the nature of the soil for working. Discs 19 can thus be convex and closed (fig. 6), while for other soil types flat, open discs in the form of spoked wheels 29 (fig. 7 and 8) may be more suitable.

Although not shown here, the soil working device 4 can otherwise also be provided with drive means, whereby the working body 10 can be rotated. In this manner a good working is also possible of for instance a very heavy soil, such as a moist clay soil, in which the working body 10 or the working bodies 19 would perhaps rotate insufficiently.

Although the invention is elucidated above with reference to a single soil working device, it will be apparent that a plurality of soil working devices can also be placed mutually adjacently or one behind another. Combinations can also be applied without problem of soil working rollers 10 and discs 19, if this were deemed desirable for an optimal working of the soil. The soil working device can otherwise also be applied without a plough coupled in front, for instance in order to once again loosen up an already ploughed field in the spring. The scope of the invention is therefore not limited in any way whatsoever to the given embodiment but is defined solely by the annexed claims.

## Claims

1. Device (4) for working soil, comprising a frame (9) which is provided with means (16) for coupling thereof to a tractor (1) or other agricultural machine (3) and in which is accommodated at least one working body (10; 19) which is rotatable on a lying axis (A; 20), the coupling means (16) comprising at least two substantially parallel outriggers (7) that are adjustable in their length direction, the coupling means (16) being arranged such that during use the axis (A; 20) encloses an angle (α; β-α) to the direction of movement (D) of the tractor (1) or agricultural machine (3), **characterized in that** the outriggers (7) are adapted to receive the frame (9) such that it is slidable in its length direction to allow adjustment of the position of the or each working body (10; 19).

2. Soil working device (4) as claimed in claim 1, **characterized in that** the coupling means (16) comprise clamping sleeves (17) with which the frame (9) can be fixed in different positions.

3. Device (4) for working soil, comprising a frame (9) which is provided with means (16) for coupling thereof to a tractor (1) or other agricultural machine (3) and in which is accommodated at least one working body (10; 19) which is rotatable on a lying axis (A; 20), the coupling means (16) comprising at least two substantially parallel outriggers (7) that are adjustable in their length direction, the coupling means (16) being arranged such that during use the axis (A; 20) encloses an angle (α; β-α) to the direction of movement (D) of the tractor (1) or agricultural machine (3), **characterized in that** the outriggers (7) are pivotable on standing shafts (23) to allow adjustment of the position of the or each working body (10; 19) and the coupling means (16) are further provided with means (24) for adjusting the pivot angle of the outriggers (7).

4. Soil working device (4) as claimed in claim 4, **characterized in that** the pivot angle adjusting means (24) can be operated hydraulically.

5. Soil working device (4) as claimed in any of the preceding claims, **characterized in that** the or each working body (10) is elongate and has a periphery which extends substantially parallel to the rotation axis (A) and on which a number of protruding working members (12) are arranged with interspacing.

6. Soil working device (4) as claimed in any of the preceding claims, **characterized in that** at least a part of the working members (12) encloses an angle with a radial from the axis of rotation (A).

7. Soil working device (4) as claimed in any of the preceding claims, **characterized in that** the working members (12) comprise knives placed substantially parallel to the rotation axis (A) of the or each working body (10) and arranged thereon in a spiral-shaped line.

8. Soil working device (4) as claimed in any of the preceding claims, **characterized by** a number of working bodies in the form of mutually parallel, separately rotatable discs (19; 29).

9. Soil working device (4) as claimed in claim 8, **characterized in that** the discs (19; 29) are each connected to the frame (9) for pivoting on a standing shaft (28).

10. Assembly (2) of an agricultural machine (3), such as a plough, and one or more soil working devices (4) as claimed in any of the preceding claims.

## Patentansprüche

1. Vorrichtung (4) zur Bodenbearbeitung, aufweisend einen Rahmen (9), welcher mit Mitteln (16) zu seinem Ankuppeln an einen Traktor (1) oder an eine andere Landwirtschaftsmaschine (3) versehen ist und in welchem zumindest ein Arbeitskörper (10, 19) untergebracht ist, welcher um eine liegende Achse (A, 20) drehbar ist, wobei die Kuppelmittel (16) zumindest zwei im Wesentlichen parallele Träger (7) aufweisen, die in ihrer Längsrichtung einstellbar sind, wobei die Kuppelmittel (16) so angeordnet sind, dass während der Verwendung die Achse (A, 20) einen Winkel (α, β-α) zur Bewegungsrichtung (D) des Traktors (1) oder der Landwirtschaftsmaschine (3) einschließt, **dadurch gekennzeichnet, dass** die Träger (7) angepasst sind, um den Rahmen (9) so aufzunehmen, dass er in seiner Längsrichtung verschiebbar ist, um ein Einstellen der Position des oder jedes Arbeitskörpers (10, 19) zu ermöglichen.

2. Bodenbearbeitungsvorrichtung (4) gemäß Anspruch 1, **dadurch gekennzeichnet, dass** die Kuppelmittel (16) Klemmmanschetten (17) aufweisen, mit denen der Rahmen (9) in verschiedenen Positionen fixiert werden kann.

3. Vorrichtung (4) zur Bodenbearbeitung, aufweisend einen Rahmen (9), welcher mit Mitteln (16) zum Kuppeln desselben mit einem Traktor (1) oder einer anderen Landwirtschaftsmaschine (3) versehen ist, und in welchem zumindest ein Arbeitskörper (10, 19) untergebracht ist, welcher um eine liegende Achse (A, 20) drehbar ist, wobei die Kuppelmittel (16) zumindest zwei im Wesentlichen parallele Träger (7) aufweisen, die in ihrer Längsrichtung einstellbar sind, wobei die Kuppelmittel (16) so angeordnet sind, dass während der Verwendung die Achse (A, 20) einen Winkel (α, β-α) zur Bewegungsrichtung (D) des Traktors (1) oder der Landwirtschaftsmaschine (3) einschließt, **dadurch gekennzeichnet, dass** die Träger (7) um stehende Achsen (23) schwenkbar sind, um eine Einstellung der Position des oder jedes Arbeitskörpers (10, 19) zu ermöglichen, und das die Kuppelmittel (16) ferner mit Mitteln (24) zum Einstellen des Schwenkwinkels der Träger (7) versehen sind.

4. Bodenbearbeitungsvorrichtung (4) gemäß Anspruch 4, **dadurch gekennzeichnet, dass** die Schwenkwinkeleinstellmittel (24) hydraulisch betätigt werden können.

5. Bodenbearbeitungsvorrichtung (4) gemäß einem der vorhergehenden Ansprüche, **dadurch gekennzeichnet, dass** der oder jeder Arbeitskörper (10) länglich ist und einen Umfang aufweist, welcher sich im Wesentlichen parallel zur Rotationsachse (A) erstreckt und an welchem eine Anzahl hervorstehender Arbeitsteile (12) mit Zwischenraum angeordnet sind.

6. Bodenbearbeitungsvorrichtung (4) gemäß einem der vorhergehenden Ansprüche, **dadurch gekennzeichnet, dass** zumindest ein Teil der Arbeitsteile (12) einen Winkel mit einer Radialen der Rotationsachse (A) einschließt.

7. Bodenbearbeitungsvorrichtung (4) gemäß einem der vorhergehenden Ansprüche, **dadurch gekennzeichnet, dass** die Arbeitsteile (12) Messer aufweisen, die im Wesentlichen parallel zur Rotationsachse (A) des oder jedes Arbeitskörpers (10) positioniert sind und daran in einer schraubenförmigen Linie angeordnet sind.

8. Bodenbearbeitungsvorrichtung (4) gemäß einem der vorhergehenden Ansprüche, **gekennzeichnet durch** eine Anzahl von Arbeitskörpern in der Form von zueinander parallelen, separat drehbaren Scheiben (19, 29).

9. Bodenbearbeitungsvorrichtung (4) gemäß Anspruch 8, **dadurch gekennzeichnet, dass** jede der Scheiben (19, 29) mit dem Rahmen (9) gekuppelt ist zum Schwenken um eine feststehende Achse (28).

10. Gefüge (2) einer Landwirtschaftsmaschine (3), wie ein Pflug, und eine oder mehr Erdbearbeitungsvorrichtungen (4) gemäß einem der vorhergehenden Ansprüche.

## Revendications

1. Dispositif (4) pour le travail du sol, comprenant un châssis (9) qui est pourvu de moyens (16) pour le couplage de celui-ci à un tracteur (1) ou à une autre machine agricole (3) et dans lequel est installé au moins un corps de travail (10 ; 19) qui est rotatif sur un axe couché (A; 20), les moyens de couplage (16) comprenant au moins deux bras 7 sensiblement parallèles qui sont réglables dans la direction de leur longueur, les moyens de couplage (16) étant agencés de façon telle que pendant le fonctionnement, l'axe (A; 20) forme un angle (α βα) par rapport à la direction du mouvement (D) du tracteur (1) ou de la machine agricole (3), **caractérisé en ce que** les bras (7) sont adaptés pour recevoir le châssis de façon à ce qu'il puisse coulisser dans la direction de sa longueur pour permettre l'ajustement de la position du ou de chaque corps de travail (10 ; 19).

2. Dispositif pour le travail du sol (4) selon la revendication 1, **caractérisé en ce que** les moyens de couplage (16) comprennent des manchons de blocage (17) avec lesquels le châssis (9) peut être fixé dans différentes positions.

3. Dispositif (4) pour le travail du sol, comprenant un châssis (9) qui est pourvu de moyens (16) pour coupler celui-ci à un tracteur ou à une autre machine agricole (3) et dans lequel est installé au moins un corps de travail (10 ; 19) qui est rotatif sur un axe couché (A ; 20), les moyens de couplage (16) comprenant au moins deux bras (7) sensiblement parallèles qui sont réglables dans la direction de leur longueur, les moyens de couplage (16) étant agencés de façon telle que pendant le fonctionnement, l'axe (A ; 20) forme un angle (α ; βα) par rapport à la direction du mouvement (D) du tracteur (1) ou de la machine agricole (3), **caractérisé en ce que** les bras (7) peuvent pivoter sur des axes debout (23) pour permettre le réglage de la position du ou de chaque corps de travail (10 ; 19) et **en ce que** les moyens de couplage (16) sont en outre pourvus de moyens (24) pour régler l'angle de pivotement des bras (7).

4. Dispositif pour le travail du sol (4) selon la revendication 3, **caractérisé en ce que** les moyens (24) de réglage de l'angle de pivotement peuvent être actionnés hydrauliquement.

5. Dispositif pour le travail du sol (4) selon l'une quelconque des revendications précédentes, **caractérisé en ce que** le ou chaque corps de travail (10) est allongé et a une périphérie qui s'étend sensiblement parallèle à l'axe de rotation (A) et sur laquelle un certain nombre d'éléments de travail en saillie (12) sont disposés espacés d'intervalles.

6. Dispositif pour le travail du sol (4) selon l'une quelconque des revendications précédentes, **caractérisé en ce qu'**au moins une partie des éléments de travail (12) forment un angle avec un rayon partant de l'axe de rotation (A).

7. Dispositif pour le travail du sol (4) selon l'une quelconque des revendications précédentes, **caractérisé en ce que** les éléments de travail (12) comprennent des couteaux placés sensiblement parallèles à l'axe de rotation (A) du ou de chaque corps de travail (10) et agencés sur celui-ci en une ligne spirale.

8. Dispositif pour le travail du sol (4) selon l'une quelconque des revendications précédentes, **caractérisé par** un certain nombre d'éléments de travail sous la forme de disques séparément rotatifs (19 ; 29), mutuellement parallèles.

9. Dispositif pour le travail du sol (4) selon la revendication 8, **caractérisé en ce que** les disques (19 ; 29) sont chacun connectés au châssis (9) pour pivoter sur un arbre debout (28).

10. Assemblage (2) d'une machine agricole (3) telle qu'une charrue, et de un ou plusieurs dispositifs pour le travail du sol (4) selon l'une quelconque des revendications précédentes.
